# EUROPEAN PATENT SPECIFICATION

(11) **EP 3 635 998 B1**
(45) Date of publication and mention of the grant of the patent: **09.03.2022**
(21) Application number: 18799363.9
(22) Date of filing: 09.05.2018
(51) Int. Cl.: H04W 72/02, H04W 28/18, H04L 12/801

(54) **ENABLING COMMUNICATION OF A WIRELESS DEVICE IN A WIRELESS COMMUNICATION NETWORK**
ERMÖGLICHUNG DER KOMMUNIKATION EINER DRAHTLOSEN VORRICHTUNG IN EINEM DRAHTLOSKOMMUNIKATIONSNETZWERK
ÉTABLISSEMENT DE COMMUNICATION D'UN DISPOSITIF SANS FIL DANS UN RÉSEAU DE COMMUNICATION SANS FIL

(30) Priority: 12.05.2017 US 201762505164 P
(43) Date of publication of application: 15.04.2020
(73) Proprietor: Telefonaktiebolaget LM Ericsson (publ), 164 83 Stockholm (SE)
(72) Inventor: BELLESCHI, Marco, 171 55 Solna (SE); BLASCO SERRANO, Ricardo, 02260 Espoo (FI)
(74) Representative: Ericsson
(86) International application number: PCT/SE2018/050487
(87) International publication number: WO 2018/208217

(56) References cited:
- EP-A1- 3 151 608
- WO-A1-2016/070911
- WO-A1-2017/030338
- US-A- 6 141 565
- US-A1- 2015 092 553
- KYOCERA: "Consideration of the zone based configuration for P2V", 3GPP DRAFT; R2-1701674_ZONE CONCEPT FOR P2V, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , vol. RAN WG2, no. Athens, Greece; 20170217 - 20170219 12 February 2017 (2017-02-12), XP051212257, Retrieved from the Internet: URL:http://www.3gpp.org/ftp/Meetings_3GPP_ SYNC/RAN2/Docs/ [retrieved on 2017-02-12]
- XINWEI: "Enhancement on PC5 functionalities for V2X services", 3GPP DRAFT; R1-1705165 ENHANCEMENT ON PC5 FUNCTIONALITIES FOR V2X SERVICES, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CED , vol. RAN WG1, no. Spokane, USA; 20170403 - 20170407 2 April 2017 (2017-04-02), XP051243296, Retrieved from the Internet: URL:http://www.3gpp.org/ftp/Meetings_3GPP_ SYNC/RAN1/Docs/ [retrieved on 2017-04-02]

## Description

### TECHNICAL FIELD

Embodiments herein relate to a radio network node, a wireless device and methods performed therein. Furthermore, a computer program product and a computer readable storage medium are also provided herein. In particular, embodiments herein relate to enable communication of the wireless device in a wireless communication network.

### BACKGROUND

In a typical wireless communication network, wireless devices, also known as wireless communication devices, mobile stations, stations (STA) and/or user equipments (UE), communicate via a Radio Access Network (RAN) to one or more core networks (CN). The RAN covers a geographical area and provides radio coverage over service areas or cells, which may also be referred to as a beam or a beam group, with each service area or beam being served or controlled by a radio network node such as a radio access node e.g., a Wi-Fi access point or a radio base station (RBS), which in some networks may also be denoted, for example, a NodeB, an eNodeB, or a gNodeB. The radio network node communicates over an air interface operating on radio frequencies with the wireless device within range of the radio network node.

A Universal Mobile Telecommunications network (UMTS) is a third generation (3G) telecommunications network, which is evolved from the second generation (2G) Global System for Mobile Communications (GSM). The UMTS terrestrial radio access network (UTRAN) is essentially a RAN using wideband code division multiple access (WCDMA) and/or High Speed Packet Access (HSPA) for user equipments. In a forum known as the Third Generation Partnership Project (3GPP), telecommunications suppliers propose and agree upon standards for third generation networks, and investigate enhanced data rate and radio capacity. In some RANs, e.g. as in UMTS, several radio network nodes may be connected, e.g., by landlines or microwave, to a controller node, such as a radio network controller (RNC) or a base station controller (BSC), which supervises and coordinates various activities of the plural radio network nodes connected thereto. This type of connection is sometimes referred to as a backhaul connection. The RNCs and BSCs are typically connected to one or more core networks.

Specifications for the Evolved Packet System (EPS), also called a Fourth Generation (4G) network, have been completed within the 3^{rd} Generation Partnership Project (3GPP) and this work continues in the coming 3GPP releases, for example to specify a Fifth Generation (5G) network. The EPS comprises the Evolved Universal Terrestrial Radio Access Network (E-UTRAN), also known as the Long Term Evolution (LTE) radio access network, and the Evolved Packet Core (EPC), also known as System Architecture Evolution (SAE) core network. E-UTRAN/LTE is a variant of a 3GPP radio access network wherein the radio network nodes are directly connected to the EPC core network rather than to RNCs. In general, in E-UTRAN/LTE the functions of an RNC are distributed between the radio network nodes, e.g. eNodeBs in LTE, and the core network. As such, the RAN of an EPS has an essentially "flat" architecture comprising radio network nodes connected directly to one or more core networks, i.e. they are not connected to RNCs. To compensate for that, the E-UTRAN specification defines a direct interface between the radio network nodes, this interface being denoted as the X2 interface.

For the 5G system currently being standardized by 3GPP, where the radio access network is referred to as New Radio (NR) and the core network is referred to as Next Generation Core (NGC), 3GPP has agreed to partly change the principles for distribution of system information (SI) that are used in LTE.

During Release 12, the LTE standard has been extended with support of device to device (D2D) (specified as "sidelink") features targeting both commercial and Public Safety applications. Some applications enabled by Rel-12 LTE are device discovery, where wireless devices are able to sense the proximity of another wireless device and associated application by broadcasting and detecting discovery messages that carry wireless device and application identities. Another application consists of direct communication based on physical channels terminated directly between wireless devices. In 3GPP, all of these applications are defined under the umbrella of Proximity Services (ProSe).

One of the potential extensions of the ProSe framework consists of support of Vehicle to everything (V2x) communication, which includes any combination of direct communication between vehicles, pedestrians, and infrastructure. V2x communication may take advantage of a Network (NW) infrastructure, when available, but at least basic V2x connectivity should be possible even in case of lack of coverage. Providing an LTE-based V2x interface may be economically advantageous because of the LTE economies of scale and it may enable tighter integration between communications with the NW infrastructure e.g. Vehicle to Infrastructure (V2I) and Vehicle to Pedestrians (V2P) and Vehicle to Vehicle (V2V) communications, as compared to using a dedicated V2x technology.

There are many research projects and field tests of connected vehicles in various countries or regions, including projects that are based on the use of existing cellular infrastructure.

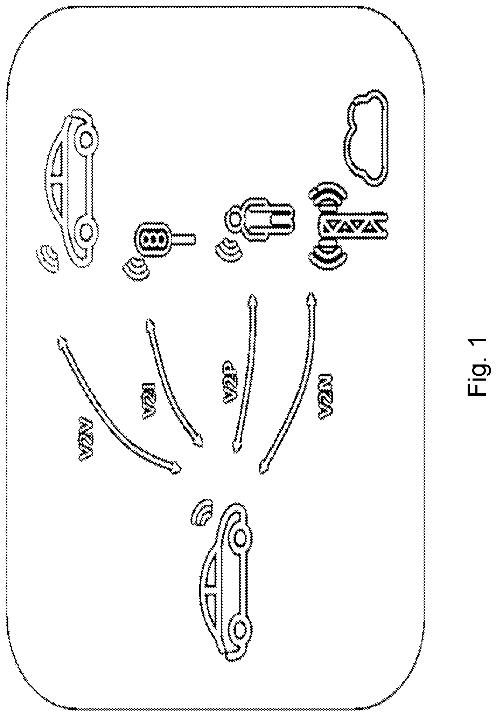

V2x communications may carry both non-safety and safety information, where each of the applications and services may be associated with specific requirements sets, e.g., in terms of latency, reliability, capacity, etc. From the application point of view, V2X includes the following types of communication/services. **Fig. 1** shows **Error! Reference source not found.**

**V2V (vehicle to vehicle):** Covers communication between vehicles using V2V applications and is predominantly broadcast-based. V2V may be realized by either direct communication between the devices in the respective vehicles, or via infrastructure such as a cellular network. An example of V2V is the transmission of a cooperative awareness message (CAM) with vehicle status information (such as position, direction, and speed) transmitted to other vehicles in the proximity repeatedly (every 100ms-1s). Another example is the transmission of a decentralized environmental notification message (DENM), which is an event-triggered message to alert vehicles. These two examples are taken from the ETSI Intelligent Transport Systems (ITS) specification of V2X applications, which also specifies the conditions under which the messages are generated. Main characteristic of V2V applications is the tight requirements on latency that can vary from 20ms (for pre-crash warning messages) to 100ms for other road safety services.

**V2I (vehicle to infrastructure):** This comprises communication between vehicles and a Roadside Unit (RSU).The RSU is a stationary transportation infrastructure entity which communicates with vehicles in its proximity. An example of V2I is transmission of speed notifications from the RSU to vehicles, as well as queue information, collision risk alerts, curve speed warnings. Due to the safety related nature of V2I, delay requirements are similar to V2V requirements.

**V2P (vehicle to pedestrian):** Covers communication between vehicles and vulnerable road users, such as pedestrians, using V2P applications. V2P typically takes place between distinct vehicles and pedestrians either directly or via infrastructure such as cellular network.

**V2N (vehicle to network):** Covers communication between a vehicle and a centralized application server (or an Intelligent transportation systems (ITS) Traffic Management Center) both using V2N applications, via infrastructure (such as a cellular network). One example is a bad road condition warning sent to all vehicles in a wide area, or traffic flow optimization in which V2N application suggests speeds to vehicles and coordinates traffic lights. Therefore, V2N messages are supposed to be controlled by a centralized entity (i.e. the Traffic Management Center) and provisioned to vehicles in a large geographical area, rather than in a small area. Additionally, unlike V2V/V2I, latency requirements are more relaxed in V2N because it is not meant to be used for non-safety purposes, e.g. 1s latency requirement is typically considered.

As previously mentioned Sidelink transmissions (also known as D2D or ProSe) over the so-called PC5 interface in cellular spectrum have been standardized in 3GPP since Rel-12. In 3GPP Rel-12 two different transmission modes have been specified in 3GPP. In one mode (mode-1), a UE in RRC_CONNECTED mode requests D2D resources and the eNB grants them via PDCCH (DCI5) or via dedicated signalling. In another mode (mode-2), a UE autonomously selects resources for transmission from a pool of available resources that the eNB provides in broadcast via SIB signalling for transmissions on carriers other than the PCell or via dedicated signaling for transmission on the PCell. Therefore, unlike the first operation mode, the second operation mode can be performed also by UEs in RRC_IDLE and in some cases even by UEs out of coverage.

In Rel.14, the usage of sidelink is extended to the V2x domain. The original design of the sidelink physical layer in Rel. 12 targeted a scenario with a small number of wireless devices such as UEs competing for the same physical resources in the spectrum, to carry voice packet for Mission Critical Push To Talk (MCPTT) traffic, and assumed low wireless device mobility. On the other hand, in V2x the sidelink should be able to cope with higher load scenario (i.e., hundreds of cars potentially contending for physical resources), to carry time/event triggered V2x messages e.g. Cooperative Awareness Message (CAM) and Decentralized Environmental Notification Message (DENM), and with high wireless device mobility. For such reasons, 3GPP has discussed possible enhancements to the sidelink physical layer.

A first enhancement that has been specified in Rel.14 is the introduction of a new transmission mode, i.e. mode-3, which resembles mode-1 in the sense that it is the radio network node such as an eNB that explicitly assigns sidelink resources to the wireless device. However, unlike mode-1, the radio network node has the possibility to configure the sidelink resources semi-persistently in a Semi Persistent Scheduling (SPS)-like fashion, i.e. the eNB assigns a sidelink grant for periodic transmissions on a certain frequency resource.

A second enhancement is the introduction of the so-called channel sensing and sensing-aware wireless device autonomous resource allocation, which corresponds to mode-4 transmission mode. Unlike random resource selection which is the base for Rel.12 and Rel.13 ProSe communications, in V2V (Rel-14) wireless devices are expected to continuously sense the channel and search for resources in the different part of the spectrum that are less interfered. Such sensing has the objective to limit collisions between wireless devices.

Two types of sensing have been considered in 3GPP:
- Sensing based on received power. A wireless device measures the received energy on specific radio resources:
   ∘ For example, based on these measurements, the wireless device decides whether the radio resources are considered to be in use by some other wireless device (i.e., 'busy') or not (i.e., 'idle').
   ∘ For example, the wireless device may use the measurements to estimate whether the transmitter is far away (e.g., if the signal is weak) or nearby (e.g., if the signal is strong).
- Sensing based on packet contents. A wireless device receives a packet and decodes it. Based on the information extracted from the packet, the wireless device may obtain some knowledge about the utilization of radio resources:
   ∘ For example, by reading a scheduling assignment (SA) packet a wireless device may know in which radio resources to expect data transmissions, and the priority level of the transmitter.
   ∘ For example, by reading a data packet a wireless device may know the position of the transmitter, the ID of transmitter, the type of transmitter, etc.

Although in mode-4 the wireless device autonomously selects the transmission resources on the basis of the sensing results, it is still possible for the radio network node to signal some sets of the values that are allowed the wireless device to use for certain transmission parameters. For example, for the number of Physical Resource Blocks (PRB) used by a wireless device for a transmission the radio network node may specify a minimum and maximum value, i.e., the wireless device is not allowed to use less than X PRBs or more than Y PRBs for the transmission; whether the wireless device is allowed to transmit or not; the maximum and minimum Modulation and Coding Scheme (MCS) the wireless device may use, the minimum/maximum transmission power; etc. In other words, the radio network node can restrict the set of values that the wireless device can select for certain transmission parameters. Such sets/restrictions (on the transmission parameters) may be configured differently by the network for different wireless device conditions e.g. depending on the wireless device speed or channel congestion status. In addition to configuration by the radio network node (or a NW node in general), the sets/restrictions may also be part of a pre-configuration. Pre-configuration may be used as an alternative or as a complement to configuration by the radio network node.

With the existing specification, the radio network node can configure different sets of values for the transmission parameters for different wireless device conditions, e.g. wireless device speed, channel congestion status. For example, the radio network node may configure a first set of transmission parameters ranges, e.g. number of PRBs, MCS, transmission power, number of Hybrid Automatic Repeat Request (HARQ) retransmissions etc. that are dependent on the wireless device speed. Additionally, the radio network node may also configure a second set of transmission parameters ranges that the wireless device should follow depending on the congestion status of the sidelink channel.

In the following a possible configuration is provided by the radio network node Speed-dependent Transmission (TX) parameters and their ranges, i.e., sets of allowed values:
∘ Speed 0kmph- 60kmph: Speed-ParametersA ▪ PRB-RangeA, MCS-RangeA, HARQ-RangeA, TX-PowerA
∘ Speed 60kmph- 100kmph: Speed-ParametersB
   ▪ PRB-RangeB, MCS-RangeB, HARQ-RangeB, TX-PowerB
∘ Speed >100kmph: Speed-ParametersC
   ▪ PRB-RangeC, MCS-RangeC, HARQ-RangeC, TX-PowerC Congestion-dependent TX parameters and their ranges (i.e., sets of allowed values):
∘ CBR 0%-20%: Cong-ParametersA
   ▪ PRB-RangeA, MCS-RangeA, HARQ-RangeA, TX-PowerA
∘ CBR 20%-70%: Cong-ParametersB
   ▪ PRB-RangeB, MCS-RangeB, HARQ-RangeB, TX-PowerB
∘ CBR >70%: Cong-ParametersC
   ▪ PRB-RangeC, MCS-RangeC, HARQ-RangeC, TX-PowerC Channel Busy Ratio (CBR) is a metric that measures the level of congestions.

Note that in general the radio network node could provide only one of the configurations, both them, or none of the configurations.

The wireless device selects the desired value for a transmission parameter within the set of values corresponding to its speed or on the measured channel congestion status. However, it might be ambiguous which values of transmission parameters the wireless device can select from in case multiple sets of transmission parameters are configured, i.e. in case both sets of speed-dependent and congestion-dependent parameters are configured.

One straightforward solution is that the radio network node should always ensure overlapping (intersection) between different configuration parameters and across different sets so that the wireless device can simply select the transmission parameters that overlap. That is, when defining PRB-RangeA in Speed-ParametersA and PRB-RangeA in Cong-ParametersA the radio network node should ensure that there are always some common values to both ranges (i.e., non-empty intersection). In this way, the wireless device can always select a value that meets both restrictions, i.e., that belongs simultaneously to both ranges.

However, this solution has some fundamental limitations, since it constrains the radio network node to always ensure an overlap between different configurations, which might not be always beneficial in terms of system performance. For example, if the wireless device is moving at a speed above 100km/h, the MCS range should be rather conservative and the allowed number of HARQ retransmission should be high to ensure reliable reception, but if at the same time the congestion of the channel, e.g. CBR, is above 70% it is better to have a more aggressive MCS to limit packet segmentation and low (or no) HARQ retransmissions to reduce the channel overload. Another prior art solutions are: WO 2017/030338 A1; KYOCERA: "Consideration of the zone based configuration for P2V", 3GPP R2-1701674; XINWEI: "Enhancement on PC5 functionalities for V2X services", 3GPP R1-1705165.

### SUMMARY

An object herein is to provide a mechanism that improves performance of a wireless communication network in an efficient manner.

The scope of the invention is defined by the appended independent claims.

According to an aspect the object is achieved by providing a method according to independent claim 1.

According to another aspect the object is achieved by providing a method performed by a system according to independent claim 6.

According to yet another aspect the object is achieved by providing a wireless device according to independent claim 7.

According to yet another aspect the object is achieved by providing a system according to independent claim 12.

It is furthermore provided herein a computer program product according to independent claim 13.

is additionally provided herein a computer-readable storage medium, according to independent claim 14.

Embodiments herein enable the wireless device to select a value of transmission parameter values among multiple sets of transmission parameter values which may be configured by the radio network node (or preconfigured) depending on the different conditions. This leads to an improved performance of the wireless communication network in an efficient manner.

### BRIEF DESCRIPTION OF THE DRAWINGS

Embodiments will now be described in more detail in relation to the enclosed drawings, in which:
- Fig. 1: is a schematic logical overview depicting vehicle communications;
- Fig. 2A: is a schematic diagram depicting a wireless communication network according to embodiments herein;
- Fig. 2B: is a schematic flowchart depicting a method performed by a wireless device according to embodiments herein;
- Fig. 2C: is a schematic flowchart depicting a method performed by a radio network node according to embodiments herein;
- Fig. 3: is a flowchart according to some embodiments herein;
- Fig. 4: is a combined flowchart and signalling scheme according to some embodiments herein;
- Fig. 5: is a schematic block diagram depicting a wireless device according to embodiments herein;
- Fig. 6: is a schematic block diagram depicting a radio network node according to embodiments herein;
- Fig. 7: schematically illustrates a telecommunication network connected via an intermediate network to a host computer;
- Fig. 8: is a generalized block diagram of a host computer communicating via a base station with a user equipment over a partially wireless connection; and
- Figs. 9-12: are flowcharts illustrating methods implemented in a communication system including a host computer, a base station and a user equipment.

### DETAILED DESCRIPTION

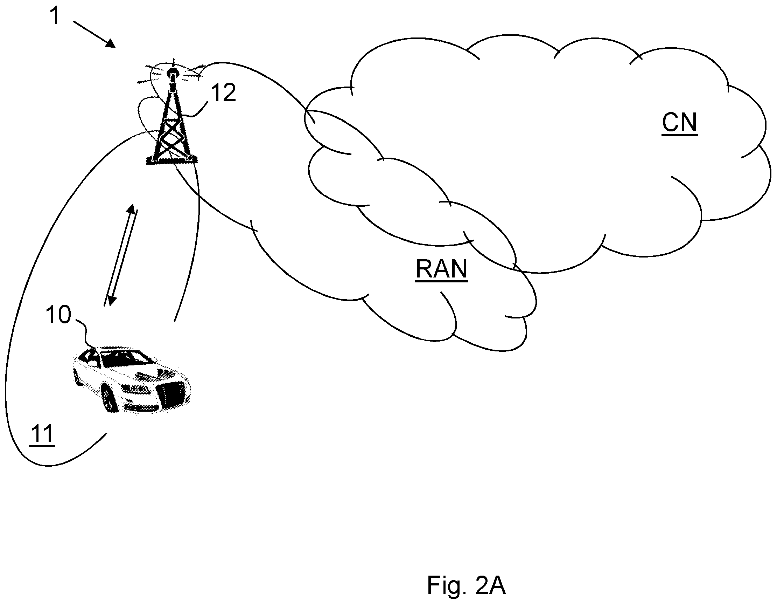

Embodiments herein relate to wireless communication networks in general. **Fig. 2A** is a schematic overview depicting **a wireless communication network 1.** The wireless communication network 1 comprises one or more RANs and one or more CNs. The wireless communication network 1 may use one or a number of different technologies, such as New Radio (NR), Wi-Fi, Long Term Evolution (LTE), LTE-Advanced, 5G, Wideband Code Division Multiple Access (WCDMA), Global System for Mobile communications/enhanced Data rate for GSM Evolution (GSM/EDGE), Worldwide Interoperability for Microwave Access (WiMax), or Ultra Mobile Broadband (UMB), just to mention a few possible implementations. Embodiments herein relate to recent technology trends that are of particular interest in a 5G context, however, embodiments are also applicable in further development of the existing wireless communication networks such as e.g. WCDMA and LTE.

In the wireless communication network 1, **a wireless device 10,** such as a mobile station, a non-access point (non-AP) STA, a STA, a user equipment and/or a wireless terminals, may communicate via one or more Access Networks (AN), e.g. a RAN, to one or more CNs. It should be understood by the skilled in the art that "wireless device" is a non-limiting term which means any terminal, wireless communications terminal, user equipment, Machine Type Communication (MTC) device, Device to Device (D2D) terminal, or node e.g. smart phone, laptop, mobile phone, sensor, relay, mobile tablets or even a small base station communicating within a service area. Embodiments herein generally relate to the resource management of wireless communication networks with the participation of device-to-device capable UEs, such as Vehicle to Vehicle (V2V) authorized UEs or ProSe authorized UEs.

The wireless communication network 1 comprises **a radio network node 12** providing radio coverage over a geographical area referred to as **service area 11** or cell, which may be provided by one or more beams or a beam group where the group of beams is covering the service area of a first radio access technology (RAT), such as NR, 5G, LTE, Wi-Fi or similar. A radio network node, such as the radio network node 12, may also serve multiple cells. The radio network node 12 may be a transmission and reception point e.g. a radio-access network node such as a Wireless Local Area Network (WLAN) access point or Access Point Station (AP STA), an access controller, a base station e.g. a radio base station such as a NodeB, an evolved Node B (eNB, eNode B), a gNodeB, a base transceiver station, a radio remote unit, an Access Point Base Station, a base station router, a transmission arrangement of a radio base station, a stand-alone access point or any other network unit capable of communicating with a wireless device within the service area served by the radio network node depending e.g. on the radio access technology and terminology used. The radio network node 12 communicates with the wireless device 10 with Downlink (DL) transmissions to the wireless device 10 and Uplink (UL) transmissions from the wireless device 10.

As stated above the radio network node 12 may determine values of transmission parameters that are overlapping and configure the wireless device with these overlapping values. However, it is not always beneficial to configure different sets of values of transmission parameters so that an overlap is ensured. If such overlap is not ensured by the network configuration, it is ambiguous which set of transmission resources the wireless device should select. Additionally, even in case overlapping is ensured for some values of transmission parameters, e.g. for the number of PRBs to be used, it might not be ensured for other value of transmission parameters, e.g. for the MCS to be used. Therefore in such case, it is ambiguous which set of values of transmission parameters from which the wireless device should select such other transmission parameters, e.g. the MCS.

Embodiments herein enable the wireless device 10 to select the proper set of values of transmission parameters among multiple sets of values of transmission parameters which may be configured by the radio network node 12 (or preconfigured) depending on the different conditions of the wireless device 10. Embodiments herein define criteria the wireless device 10 follows when the wireless device 10 selects a set of values of transmission parameters among possible multiple sets of values of transmission parameters the radio network node may configure. The herein disclosed methods ensure or at least enable that system performances, e.g. in terms of transmission reliability, transmission rate, network load, are taken into account when selecting values of transmission parameters for the wireless device 10.

In embodiments herein it is considered for simplicity that the set of values of transmission parameters may e.g. be speed-dependent being a wireless device related condition and/or congestion-dependent being a network related condition. However, the methods disclosed hereinmay easily be extended to other wireless device-related conditions, e.g. location, direction, battery, category of the wireless device e.g. if it is a prioritized/privileged wireless device, service to be transmitted by the wireless device, etc. Similarly, it is assumed that the radio network node 12 provides values for transmission parameters such as PRB ranges, MCS ranges, number of HARQ retransmissions, Transmission (TX) power ranges. However, the methods disclosed hereinafter may be extended to values of other transmission parameters, e.g. number of Multiple Input Multiple Output (MIMO) layers to use, synchronization references to use, number of transmit antennas to use, etc. In addition, a pre-configuration may be use for some/all of the parameters.

In some embodiments, the wireless device 10 may obtain the multiple sets of values of transmission parameters by receiving the multiple sets of values of transmission parameters from the radio network node 12 in broadcast signalling or in dedicated signaling, e.g., Radio Resource Control (RRC) signalling. Additionally or alternatively, the wireless device 10 may be preconfigured, e.g. by an application server, or in the Universal Integrated Circuit Card (UICC) and/or in the Mobile Equipment (ME) i.e. the wireless device, with the multiple sets of values of transmission parameters. Such multiple sets of values of transmission parameters may comprise values based on e.g. position of the wireless device 10, speed/acceleration of the wireless device 10, congestion status of the network/cell, battery of the wireless device 10, category of the wireless device, e.g., if it is a prioritized or privileged wireless device. A prioritized or privileged wireless device means that the wireless device e.g. has a subscription stating that the wireless device is prioritized or has certain quality of service requirements.

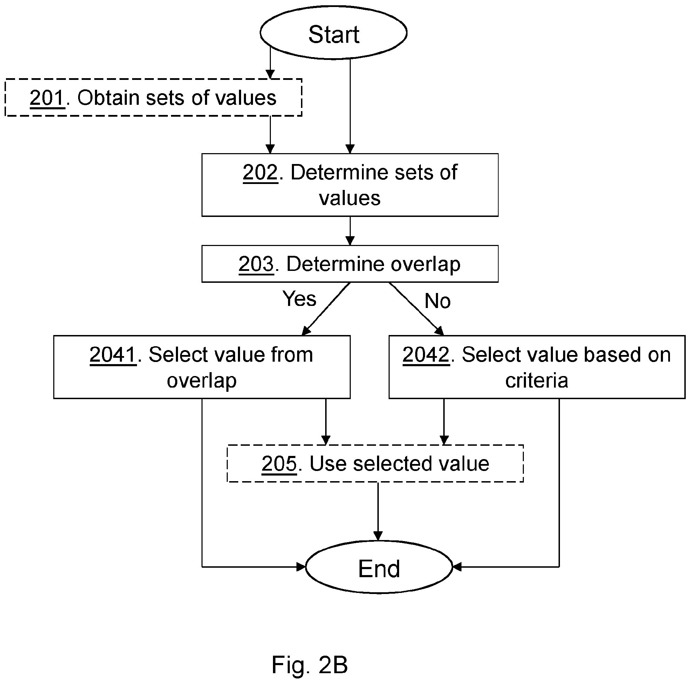

The method actions performed by the wireless device 10 for handling communication in the wireless communication network 1 according to embodiments herein will now be described with reference to a flowchart depicted in **Fig. 2B****.** The actions do not have to be taken in the order stated below, but may be taken in any suitable order. Actions performed in some embodiments are marked with dashed boxes.

**Action 201.** The wireless device 10 may obtain multiple sets of values of transmission parameters.

**Action 202.** The wireless device 10 determines sets of values of transmission parameters based on two or more conditions, wherein the transmission parameters are related to wireless devices. The two or more conditions may comprise a congestion condition dependent on congestion of traffic being an example of a network related condition, a movement condition dependent on speed and/or direction of the wireless device, a location condition dependent on location of the wireless device, and/or a capacity condition dependent on capacity of the wireless device. The sets of values may be determined by being selected from the obtained multiple sets of values.

**Action 203.** The wireless device 10 further determines whether there is one or more overlapping values of the sets of values.

**Action 2041.** When determined that there is one or more overlapping values, the wireless device 10 selects a value of the one or more overlapping values.

**Action 2042.** When determined that there is no overlapping values, the wireless device 10 selects a value from the sets of values of transmission parameters based on a criteria. The criteria may be related to a priority of the set of values of transmission parameters in relation to another set.

**Action 205.** The wireless device 10 may then use the selected value during communication. The selected value may indicate a transmission or a non-transmission e.g. a zero value.

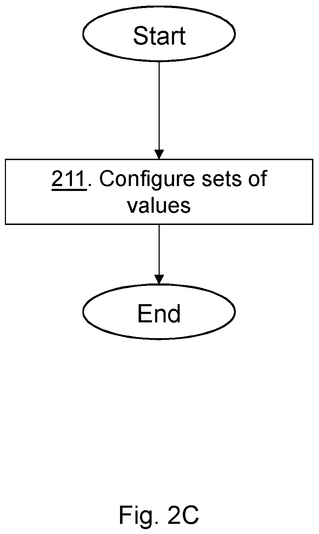

The method actions performed by the radio network node 12 for handling radio resources of the wireless communication network 1 according to embodiments herein will now be described with reference to a flowchart depicted in **Fig. 2C****.** The actions do not have to be taken in the order stated below, but may be taken in any suitable order. Actions performed in some embodiments are marked with dashed boxes.

**Action 211.** The radio network node 12 configures the wireless device 10 with multiple sets of values of transmission parameters, wherein the transmission parameters are related to conditions being network related conditions such as the congestion condition and/or wireless device related conditions such as the speed condition.

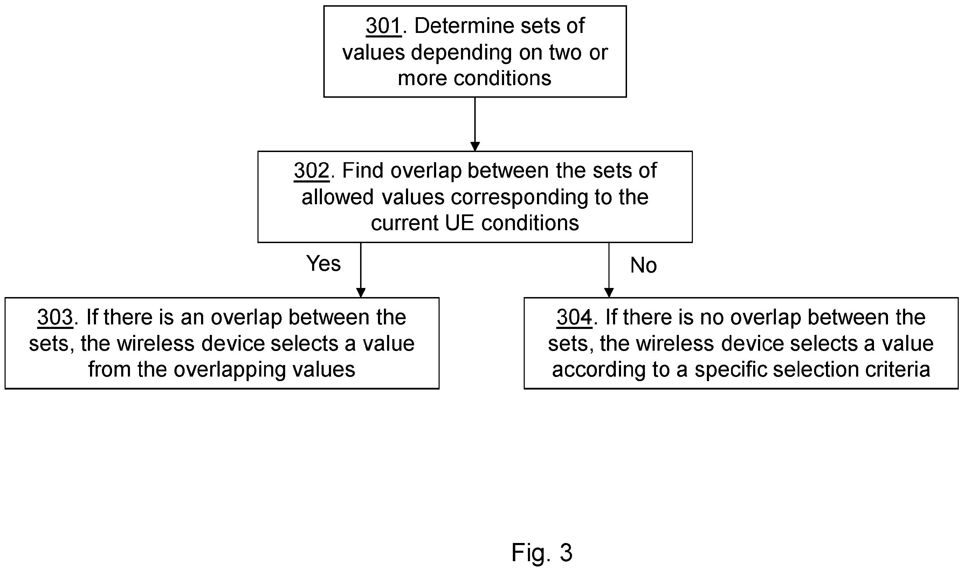

The following is an example of embodiments herein performed by the wireless device 10 as shown in **Fig. 3****:**
**Action 301.** The wireless device 10 determines a candidate set of values for one or more transmission parameters that the wireless device 10 may use depending on its condition, e.g. position, direction, speed/acceleration, congestion status, battery, category, service to be transmitted. This is an example of action 202 in Fig. 2B. Assuming for simplicity that the radio network node 12 only configures two sets of values of transmission parameters, e.g. one speed-dependent and one congestion-dependent, say such candidate transmission parameters are denoted as:
a. Speed-ParametersB (PRB-RangeB, MCS-RangeB, RetransmissionB, TX-PowerB, etc.)
b. Cong-ParametersA (PRB-RangeA, MCS-RangeA, RetransmissionA, TX-PowerA, etc.)

**Action 302.** For each transmission parameter, i.e. PRB range, MCS range, HARQ range, TX power etc., the wireless device 10 determines if there is any overlap, i.e., are there any common values, across multiple set of values, e.g. across PRB-RangeA in Cong-ParametersA and PRB-RangeB in Speed-ParametersB; across MCS-RangeA in Cong-ParametersA and MCS-RangeB in Speed-ParametersB; etc. This is an example of action 203 in Fig. 2B.

**Action 303.** If there is an overlap the wireless device 10 selects a respective value for the transmission parameters that belongs to this overlap. That is, a value that belongs to both sets of values.

**Action 304.** If there is no overlap between the sets of values, i.e. PRB range, MCS range, HARQ range, TX power etc., the wireless device 10 follows the selection criteria disclosed below. In some embodiments, action 304 is used only for certain transmission parameters. For example: for PRB range there is an overlap between PRB-RangeA in Cong-ParametersA and PRB-RangeB in Speed-ParametersB and consequently, the wireless device 10 chooses a value in the overlap between both ranges, see action 2041 in Fig. 2B; for MCS range there is no overlap between MCS-RangeA in Cong-ParametersA and MCS-RangeB in Speed-ParametersB and consequently, the wireless device 10 uses action 304 to choose an MCS value, which is an example of the action 2042 in Fig. 2B.

For the action 304, one of the following selection criteria may be followed by the wireless device 10:
- Each set of values of transmission parameters is given a priority. For example, congestion-aware values are given highest priority. When no overlapping is detected the wireless device 10 selects the transmission parameter from the set of the highest priority. The (pre)-configuration of such priority may depend on e.g. location of the wireless device 10, or UE measurements. For example, in a city center the use of congestion-aware transmission parameters is prioritized over speed-aware transmission parameters. In a highway, the opposite behavior is used;
- A priority is given to each set of values of transmission parameter, e.g. if the CBR > 70% priority 1 is given so that the wireless device 10 should always prioritize selection of a value of the transmission parameters from the congestion-aware set of values of transmission parameters when CBR>70%, while for CBR < 20% the priority is lower, thus each set of values may have different priorities under different conditions.
   ∘ *CBR* >*70%: Prio 1*
   ∘ *Speed* >*100kmph: Prio 2*
   ∘ *CBR 20%-70%: Prio 3*
   ∘ *Speed 60kmph- 100kmph: Prio 4*
   ∘ *CBR 20%-70%: Prio 5*
   ∘ *Speed 0kmph- 60kmph: Prio 6*
   The radio network node 12 may ensure that the priority associated to a single threshold is unique across the multiple thresholds for the different sets. Alternatively, if more than one set is given the same priority a second criterion may be used, e.g., from this list;
- The wireless device 10 may randomly select one set of values of the transmission parameter. The random function can be such that each set may be chosen with equal probability or following a certain (pre)configured probability which is associated to the set of transmission parameter (therefore depending on the priority of the set as in criteria 1) or associated to different thresholds across the multiple sets (therefore depending on the priority of the different thresholds across different sets as in criteria 2);
- The wireless device 10 selects the set of values of transmission parameters that are most restrictive. For example, if PRB-RangeA in Cong-ParametersA indicates a range [10-20] PRBs and PRB-RangeB in Speed-ParametersB indicates [50-100] PRBs, the wireless device 10 may select a values of the set with the less interval, also referred to as range or number of PRBs, e.g. PRB-RangeA in Cong-ParametersA since maximum 20 PRBs will be used.
   ∘ Alternative criteria is that the wireless device 10 selects the set of values of transmission parameters that are more aggressive, i.e. PRB-RangeB in Speed-ParametersB
   ∘ In case the two sets are partly overlapping, e.g. PRB-RangeA in Cong-ParametersA [10, 20] and PRB-RangeB in Speed-ParametersB indicates [5-25] PRBs, the lowest upper bound is considered when selecting the set, i.e. the lowest upper bound is 20, therefore PRB-RangeA in Cong-ParametersA is used. Alternatively, the lowest lower bound may be considered, i.e. the lowest lower bound is 5, therefore PRB-RangeB in Speed-ParametersB is used. Alternatively, first it is considered the lowest upper bound and if it is the same for multiple sets, the lowest lower bound is considered.
- The wireless device 10 may select the transmission parameter value from union of the transmission parameters across multiple sets. In the example in criteria 4, the wireless device 10 may select the number of PRBs to be used from the set union of the sets [10-20] and [50-100];
- The wireless device 10 may select the value of the transmission parameter from a (pre)-configured default (or backup) set of transmission parameter values. Such (pre)-configured default (or backup) set of transmission parameter values may be used when there is no overlap between one or more transmission parameters across the different sets;
- The wireless device 10 may alternate the usage of the different set of values of transmission parameters. E.g. after N subframes or P transmission or T seconds, the wireless device 10 selects the value of one or more transmission parameters from a different set of values of transmission parameters;
- In case there is overlap of values across multiple sets only for some transmission parameters (i.e. PRB range, MCS range, but not for HARQ range or TX power etc.), the wireless device 10 may select another set of values also for those transmission parameters in which there is an overlap. For example, if the wireless device 10 selects HARQ-RangeA in Cong-ParametersA following one of the criteria above, the wireless device 10 may also select the other transmission parameters PRB-RangeA, MCS range, TX-PowerA in Cong-ParametersA regardless of whether there is an overlapping or not.
   ∘ A priority may also be associated to the different transmission parameters, so that if there is no overlap for more than one transmission parameter across multiple sets of transmission parameters, the wireless device 10 may first select (following one of the above criteria) the set of values of transmission parameters for the transmission parameter of highest priority. For example, the network may associate priority 1 to PRB range, priority 2 to MCS range, and so on. The wireless device 10 may first select the set of values of transmission parameters from which to select the PRBs, the values of the other transmission parameters are then selected from the same set.

The wireless device 10 may use the criteria mentioned above regardless of the existence of an overlap between the different sets of parameters values or not.

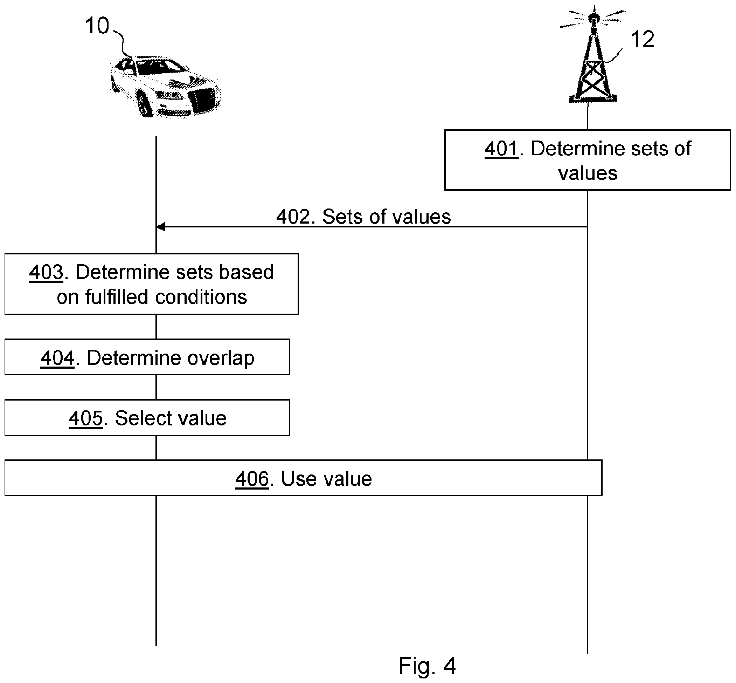

**Fig. 4** is a combined flowchart and signaling scheme according to some embodiments herein.

**Action 401.** The radio network node 12 determines multiple sets of values of transmission parameters, wherein each set of values is associated to a condition such as congestion in the cell 11, location of the wireless device 10, speed of the wireless device 10.

**Action 402.** The radio network node 12 transmits (or configures) the wireless device 10 with the multiple sets of transmission parameter values.

**Action 403.** The wireless device 10 determines a candidate set of values for one or more transmission parameters that the wireless device 10 uses depending on its condition, e.g. position, speed/acceleration, congestion status, battery, category.

**Action 404.** The wireless device 10 determines whether there is an overlap between two or more sets of transmission parameter values.

**Action 405.** The wireless device selects a value of a transmission parameter either of overlapping values or a value in a prioritized set of transmission parameter.

**Action 406.** The wireless device 10 then uses the selected value during transmissions in the wireless communication network.

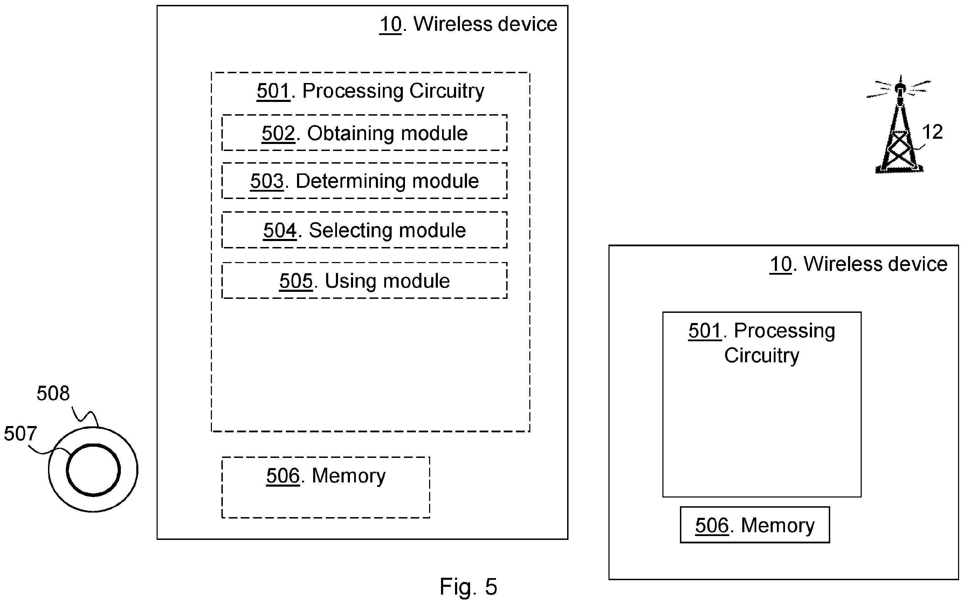

**Fig. 5** is a schematic block diagram depicting the wireless device 10 for handling communication in the wireless communication network.

The wireless device 10 may comprise **processing circuitry 501**, e.g. one or more processors, configured to perform the methods herein.

The wireless device 10 may comprise **an obtaining module 502.** The wireless device 10, the processing circuitry 501, and/or the obtaining module 502 may be configured, from the radio network node 12 or be pre-configured, to obtain the multiple sets of values of transmission parameters, wherein each set of values of transmission parameters may be associated to a condition such as congestion, location of the wireless device, or a speed of the wireless device.

The wireless device 10 may comprise a **determining module 503.** The wireless device 10, the processing circuitry 501, and/or the determining module 503 is configured to determine the sets of values of transmission parameters based on the two or more conditions, wherein the transmission parameters are related to wireless devices. The two or more conditions may comprise a congestion condition dependent on congestion of traffic, a movement condition dependent on speed and/or direction of the wireless device, a location condition dependent on location of the wireless device, and/or a capacity condition dependent on capacity of the wireless device. The wireless device 10, the processing circuitry 501, and/or the determining module 503 is further configured to determine whether there is one or more overlapping values of the sets of values. The wireless device 10, the processing circuitry 501, and/or the determining module 503 may be configured to determine the sets of values by selecting from the obtained multiple sets of values. The wireless device 10, the processing circuitry 501, and/or the determining module 503 may e.g. be configured to determine a candidate set of values for one or more transmission parameter that the wireless device 10 may use depending on its condition, e.g. position, speed/acceleration, congestion status, battery, category. The wireless device 10, the processing circuitry 501, and/or the determining module 503 is configured to determine whether there is an overlap between two or more sets of transmission parameter values.

The wireless device 10 may comprise **a selecting module 504.** The wireless device 10, the processing circuitry 501, and/or the selecting module 504 is configured to, when determined that there is one or more overlapping values, select a value of the one or more overlapping values. The wireless device 10, the processing circuitry 501, and/or the selecting module 504 is configured to, when determined that there is no overlapping values select a value from the sets of values of transmission parameters based on a criteria. The criteria may be related to a priority of the set of values of transmission parameters in relation to one another set. The wireless device 10, the processing circuitry 501, and/or the selecting module 504 may be configured to select a value of a transmission parameter either of overlapping values or a value in a prioritized set of transmission parameter.

The wireless device 10 may comprise **a using module 505.** The wireless device 10, the processing circuitry 501, and/or the using module 505 may be configured to use the selected value during communication e.g. performing transmissions in the wireless communication network.

The wireless device 10 further comprises a **memory 506** comprising one or more memory units. The memory 506 comprises instructions executable by the processing circuitry 501 to perform the methods herein when being executed in the wireless device 10. The memory 506 is arranged to be used to store e.g. information, data such as sets of transmission parameter values, conditions, locations, speed, category, etc.

The methods according to the embodiments described herein for the wireless device 10 are respectively implemented by means of e.g. **a computer program product 507** or a computer program, comprising instructions, i.e., software code portions, which, when executed on at least one processor, cause the at least one processor to carry out the actions described herein, as performed by the wireless device 10. The computer program product 507 may be stored on **a computer-readable storage medium 508,** e.g. a disc, a universal serial bus (USB) stick or similar. The computer-readable storage medium 508, having stored thereon the computer program product 507, may comprise the instructions which, when executed on at least one processor, cause the at least one processor to carry out the actions described herein, as performed by the wireless device 10. In some embodiments, the computer-readable storage medium 508 may be a non-transitory computer-readable storage medium. Thus, the wireless device 10 may comprise the processing circuitry 501 and the memory 506, said memory 506 comprising instructions executable by said processing circuitry 501whereby said wireless device 10 is operative to perform the methods herein.

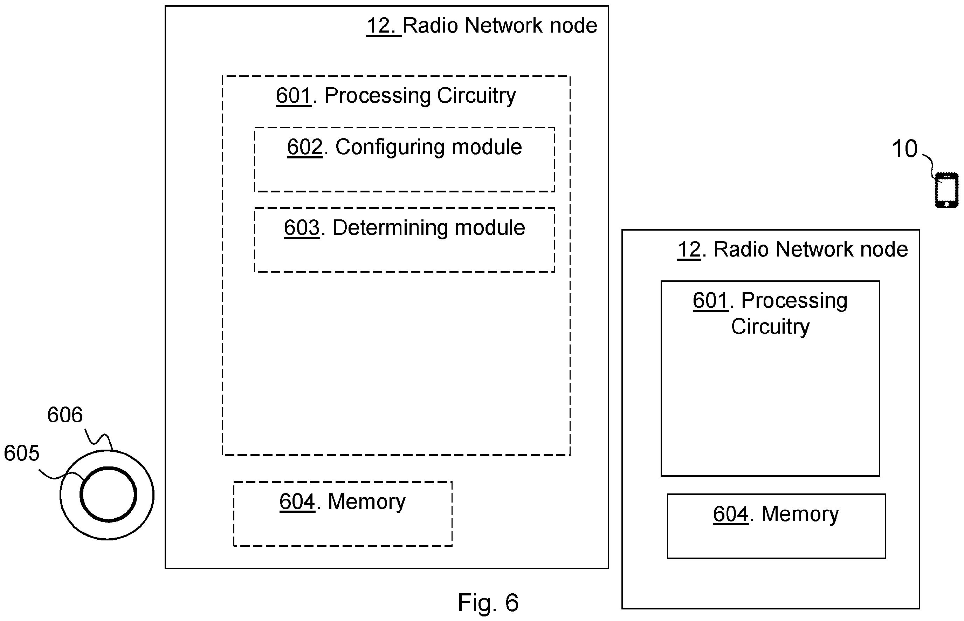

**Fig. 6** is a schematic block diagram depicting the radio network node 12 for enabling communication e.g. setting transmission parameter values, for the wireless device 10 in the wireless communication network 1.

The radio network node 12 may comprise **processing circuitry 601,** e.g. one or more processors, configured to perform the methods herein.

The radio network node 12 may comprise **a configuring module 602.** The radio network node 12, the processing circuitry 601, and/or the configuring module 602 is configured to configure the wireless device 10 with multiple sets of values of transmission parameters, wherein the transmission parameters are related to network related conditions and/or wireless device related conditions and are for the wireless device to select from, e.g. conditions being either network related conditions or wireless device related conditions or both. The sets may be associated with different wireless device conditions.

The radio network node 12 may comprise **a determining module 603.** The radio network node 12, the processing circuitry 601, and/or the determining module 603 may be configured to determine the multiple sets of transmission parameter values.

The radio network node 12 further comprises a **memory 604** comprising one or more memory units. The memory 604 comprises instructions executable by the processing circuitry 601 to perform the methods herein when being executed in the radio network node 12. The memory 604 is arranged to be used to store e.g. information, data such as configurations, sets, values, etc.

The methods according to the embodiments described herein for the radio network node 12 are respectively implemented by means of e.g. **a computer program product 605** or a computer program, comprising instructions, i.e., software code portions, which, when executed on at least one processor, cause the at least one processor to carry out the actions described herein, as performed by the radio network node 12. The computer program product 605 may be stored on **a computer-readable storage medium 606,** e.g. a disc, a USB stick, or similar. The computer-readable storage medium 606, having stored thereon the computer program product 605, may comprise the instructions which, when executed on at least one processor, cause the at least one processor to carry out the actions described herein, as performed by the radio network node 12. In some embodiments, the computer-readable storage medium may be a non-transitory computer-readable storage medium. Thus, the radio network node 12 may comprise the processing circuitry 601 and the memory 604, said memory 604 comprising instructions executable by said processing circuitry 601 whereby said radio network node 12 is operative to perform the methods herein.

As will be readily understood by those familiar with communications design, means or modules may be implemented using digital logic and/or one or more microcontrollers, microprocessors, or other digital hardware. In some embodiments, several or all of the various functions may be implemented together, such as in a single application-specific integrated circuit (ASIC), or in two or more separate devices with appropriate hardware and/or software interfaces between them. Several of the functions may be implemented on a processor shared with other functional components of a wireless terminal or network node, for example.

Alternatively, several of the functional elements of the processing means discussed may be provided through the use of dedicated hardware, while others are provided with hardware for executing software, in association with the appropriate software or firmware. Thus, the term "processor" or "controller" as used herein does not exclusively refer to hardware capable of executing software and may implicitly include, without limitation, digital signal processor (DSP) hardware, read-only memory (ROM) for storing software, random-access memory for storing software and/or program or application data, and non-volatile memory. Other hardware, conventional and/or custom, may also be included. Designers of communications receivers will appreciate the cost, performance, and maintenance tradeoffs inherent in these design choices.

It is herein disclosed that the wireless device may obtain multiple sets of transmission parameters, which transmission parameters are wireless device related. The wireless device determines sets of transmission parameter values based on two or more conditions, such as congestion of traffic and speed of the wireless device. The wireless device determines whether there is one or more overlapping values of the sets of transmission parameter values. That being the case, the wireless device selects a value of the one or more overlapping values. That not being the case, the wireless device selects a value from the set of transmission parameter values based on a criteria such as a set of a highest priority.

It is further herein disclosed a method performed by a radio network node for handling resources of a wireless communication network. The radio network node configures the wireless device with multiple sets of transmission parameters, wherein the transmission parameters are related to conditions either network related conditions or wireless device related conditions.

It is furthermore provided herein a computer program comprising instructions, which, when executed on at least one processor, cause the at least one processor to carry out any of the methods above, as performed by the wireless device or the radio network node. It is additionally provided herein a computer-readable storage medium, having stored thereon a computer program comprising instructions which, when executed on at least one processor, cause the at least one processor to carry out the method according to any of the methods above, as performed by the wireless device or the radio network node.

A radio network node and a wireless device are also herein provided to perform the methods herein.

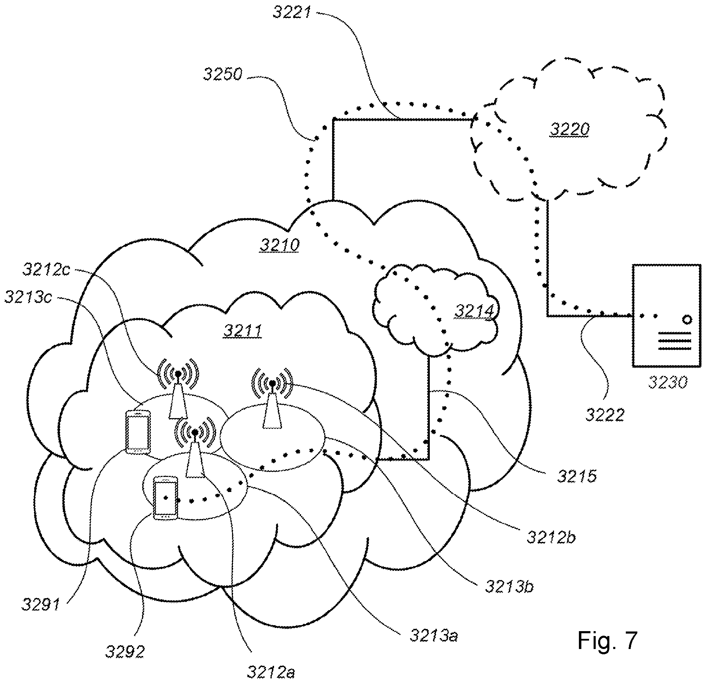

With reference to **Fig 7****,** in accordance with an embodiment, a communication system includes a telecommunication network 3210, such as a 3GPP-type cellular network, which comprises an access network 3211, such as a radio access network, and a core network 3214. The access network 3211 comprises a plurality of base stations 3212a, 3212b, 3212c, such as NBs, eNBs, gNBs or other types of wireless access points being examples of the radio network node 12 herein, each defining a corresponding coverage area 3213a, 3213b, 3213c. Each base station 3212a, 3212b, 3212c is connectable to the core network 3214 over a wired or wireless connection 3215. A first user equipment (UE) 3291, being an example of the wireless device 10, located in coverage area 3213c is configured to wirelessly connect to, or be paged by, the corresponding base station 3212c. A second UE 3292 in coverage area 3213a is wirelessly connectable to the corresponding base station 3212a. While a plurality of UEs 3291, 3292 are illustrated in this example, the disclosed embodiments are equally applicable to a situation where a sole UE is in the coverage area or where a sole UE is connecting to the corresponding base station 3212.

The telecommunication network 3210 is itself connected to a host computer 3230, which may be embodied in the hardware and/or software of a standalone server, a cloud-implemented server, a distributed server or as processing resources in a server farm. The host computer 3230 may be under the ownership or control of a service provider, or may be operated by the service provider or on behalf of the service provider. The connections 3221, 3222 between the telecommunication network 3210 and the host computer 3230 may extend directly from the core network 3214 to the host computer 3230 or may go via an optional intermediate network 3220. The intermediate network 3220 may be one of, or a combination of more than one of, a public, private or hosted network; the intermediate network 3220, if any, may be a backbone network or the Internet; in particular, the intermediate network 3220 may comprise two or more sub-networks (not shown).

The communication system of Figure 7 as a whole enables connectivity between one of the connected UEs 3291, 3292 and the host computer 3230. The connectivity may be described as an over-the-top (OTT) connection 3250. The host computer 3230 and the connected UEs 3291, 3292 are configured to communicate data and/or signaling via the OTT connection 3250, using the access network 3211, the core network 3214, any intermediate network 3220 and possible further infrastructure (not shown) as intermediaries. The OTT connection 3250 may be transparent in the sense that the participating communication devices through which the OTT connection 3250 passes are unaware of routing of uplink and downlink communications. For example, a base station 3212 may not or need not be informed about the past routing of an incoming downlink communication with data originating from a host computer 3230 to be forwarded (e.g., handed over) to a connected UE 3291. Similarly, the base station 3212 need not be aware of the future routing of an outgoing uplink communication originating from the UE 3291 towards the host computer 3230.

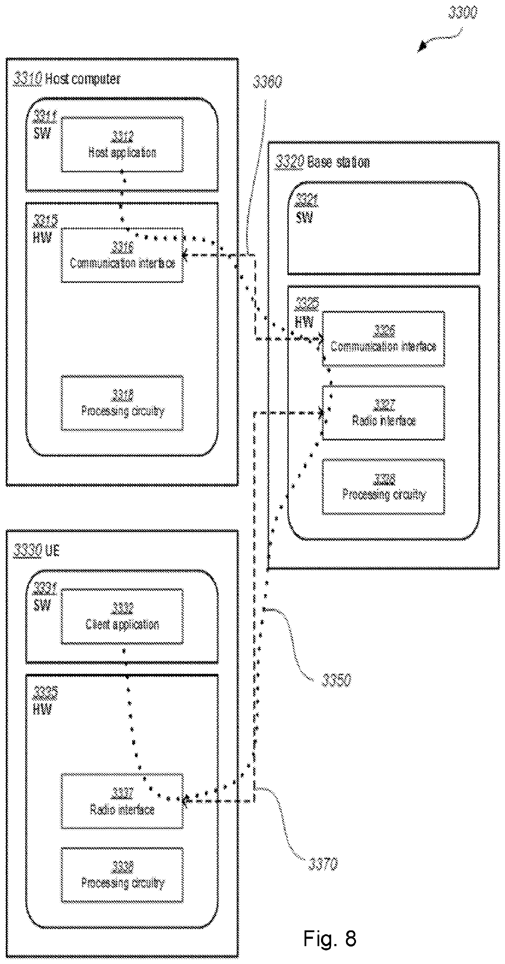

Example implementations, in accordance with an embodiment, of the UE, base station and host computer discussed in the preceding paragraphs will now be described with reference to **Fig. 8****.** In a communication system 3300, a host computer 3310 comprises hardware 3315 including a communication interface 3316 configured to set up and maintain a wired or wireless connection with an interface of a different communication device of the communication system 3300. The host computer 3310 further comprises processing circuitry 3318, which may have storage and/or processing capabilities. In particular, the processing circuitry 3318 may comprise one or more programmable processors, application-specific integrated circuits, field programmable gate arrays or combinations of these (not shown) adapted to execute instructions. The host computer 3310 further comprises software 3311, which is stored in or accessible by the host computer 3310 and executable by the processing circuitry 3318. The software 3311 includes a host application 3312. The host application 3312 may be operable to provide a service to a remote user, such as a UE 3330 connecting via an OTT connection 3350 terminating at the UE 3330 and the host computer 3310. In providing the service to the remote user, the host application 3312 may provide user data which is transmitted using the OTT connection 3350.

The communication system 3300 further includes a base station 3320 provided in a telecommunication system and comprising hardware 3325 enabling it to communicate with the host computer 3310 and with the UE 3330. The hardware 3325 may include a communication interface 3326 for setting up and maintaining a wired or wireless connection with an interface of a different communication device of the communication system 3300, as well as a radio interface 3327 for setting up and maintaining at least a wireless connection 3370 with a UE 3330 located in a coverage area (not shown in Fig.8) served by the base station 3320. The communication interface 3326 may be configured to facilitate a connection 3360 to the host computer 3310. The connection 3360 may be direct or it may pass through a core network (not shown in Fig.8) of the telecommunication system and/or through one or more intermediate networks outside the telecommunication system. In the embodiment shown, the hardware 3325 of the base station 3320 further includes processing circuitry 3328, which may comprise one or more programmable processors, application-specific integrated circuits, field programmable gate arrays or combinations of these (not shown) adapted to execute instructions. The base station 3320 further has software 3321 stored internally or accessible via an external connection.

The communication system 3300 further includes the UE 3330 already referred to. Its hardware 3335 may include a radio interface 3337 configured to set up and maintain a wireless connection 3370 with a base station serving a coverage area in which the UE 3330 is currently located. The hardware 3335 of the UE 3330 further includes processing circuitry 3338, which may comprise one or more programmable processors, application-specific integrated circuits, field programmable gate arrays or combinations of these (not shown) adapted to execute instructions. The UE 3330 further comprises software 3331, which is stored in or accessible by the UE 3330 and executable by the processing circuitry 3338. The software 3331 includes a client application 3332. The client application 3332 may be operable to provide a service to a human or non-human user via the UE 3330, with the support of the host computer 3310. In the host computer 3310, an executing host application 3312 may communicate with the executing client application 3332 via the OTT connection 3350 terminating at the UE 3330 and the host computer 3310. In providing the service to the user, the client application 3332 may receive request data from the host application 3312 and provide user data in response to the request data. The OTT connection 3350 may transfer both the request data and the user data. The client application 3332 may interact with the user to generate the user data that it provides.

It is noted that the host computer 3310, base station 3320 and UE 3330 illustrated in Fig.8 may be identical to the host computer 3230, one of the base stations 3212a, 3212b, 3212c and one of the UEs 3291, 3292 of Fig. 7, respectively. This is to say, the inner workings of these entities may be as shown in Fig.8 and independently, the surrounding network topology may be that of Fig. 7.

In Fig.8, the OTT connection 3350 has been drawn abstractly to illustrate the communication between the host computer 3310 and the user equipment 3330 via the base station 3320, without explicit reference to any intermediary devices and the precise routing of messages via these devices. Network infrastructure may determine the routing, which it may be configured to hide from the UE 3330 or from the service provider operating the host computer 3310, or both. While the OTT connection 3350 is active, the network infrastructure may further take decisions by which it dynamically changes the routing (e.g., on the basis of load balancing consideration or reconfiguration of the network).

The wireless connection 3370 between the UE 3330 and the base station 3320 is in accordance with the teachings of the embodiments described throughout this disclosure. One or more of the various embodiments improve the performance of OTT services provided to the UE 3330 using the OTT connection 3350, in which the wireless connection 3370 forms the last segment. More precisely, the teachings of these embodiments may improve the latency by letting the wireless device select values of transmission parameters that are overlapping of the sets and thereby provide benefits such as reduced user waiting time, and better responsiveness.

A measurement procedure may be provided for the purpose of monitoring data rate, latency and other factors on which the one or more embodiments improve. There may further be an optional network functionality for reconfiguring the OTT connection 3350 between the host computer 3310 and UE 3330, in response to variations in the measurement results. The measurement procedure and/or the network functionality for reconfiguring the OTT connection 3350 may be implemented in the software 3311 of the host computer 3310 or in the software 3331 of the UE 3330, or both. In embodiments, sensors (not shown) may be deployed in or in association with communication devices through which the OTT connection 3350 passes; the sensors may participate in the measurement procedure by supplying values of the monitored quantities exemplified above, or supplying values of other physical quantities from which software 3311, 3331 may compute or estimate the monitored quantities. The reconfiguring of the OTT connection 3350 may include message format, retransmission settings, preferred routing etc.; the reconfiguring need not affect the base station 3320, and it may be unknown or imperceptible to the base station 3320. Such procedures and functionalities may be known and practiced in the art. In certain embodiments, measurements may involve proprietary UE signaling facilitating the host computer's 3310 measurements of throughput, propagation times, latency and the like. The measurements may be implemented in that the software 3311, 3331 causes messages to be transmitted, in particular empty or 'dummy' messages, using the OTT connection 3350 while it monitors propagation times, errors etc.

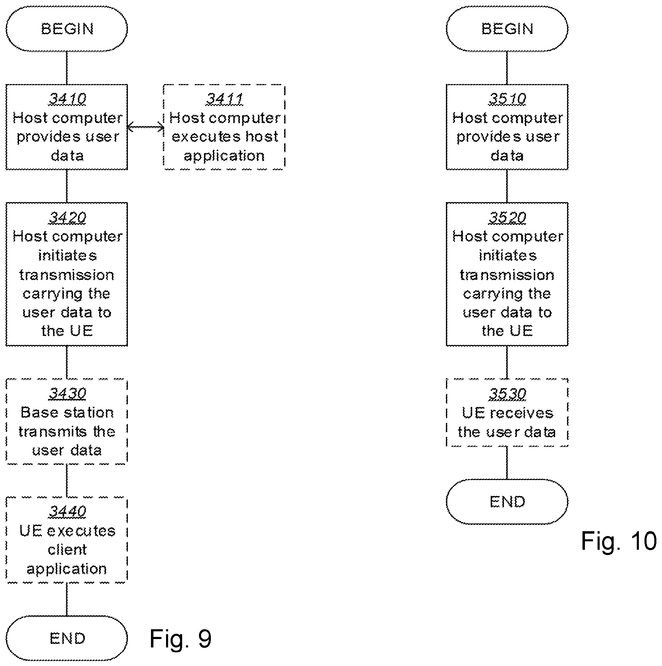

**Fig. 9** is a flowchart illustrating a method implemented in a communication system, in accordance with one embodiment. The communication system includes a host computer, a base station and a UE which may be those described with reference to Figures 7 and 8. For simplicity of the present disclosure, only drawing references to Figure 9 will be included in this section. In a first step 3410 of the method, the host computer provides user data. In an optional substep 3411 of the first step 3410, the host computer provides the user data by executing a host application. In a second step 3420, the host computer initiates a transmission carrying the user data to the UE. In an optional third step 3430, the base station transmits to the UE the user data which was carried in the transmission that the host computer initiated, in accordance with the teachings of the embodiments described throughout this disclosure. In an optional fourth step 3440, the UE executes a client application associated with the host application executed by the host computer.

**Fig. 10** is a flowchart illustrating a method implemented in a communication system, in accordance with one embodiment. The communication system includes a host computer, a base station and a UE which may be those described with reference to Figures 7 and 8. For simplicity of the present disclosure, only drawing references to Figure 10 will be included in this section. In a first step 3510 of the method, the host computer provides user data. In an optional substep (not shown) the host computer provides the user data by executing a host application. In a second step 3520, the host computer initiates a transmission carrying the user data to the UE. The transmission may pass via the base station, in accordance with the teachings of the embodiments described throughout this disclosure. In an optional third step 3530, the UE receives the user data carried in the transmission.

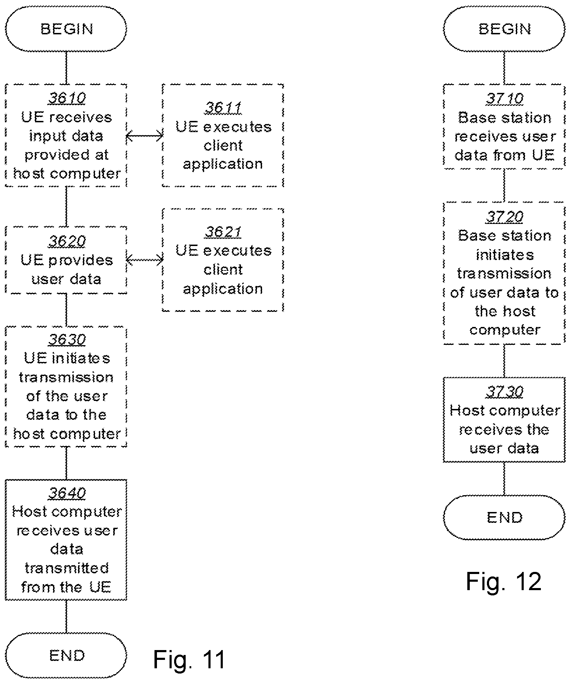

**Fig. 11** is a flowchart illustrating a method implemented in a communication system, in accordance with one embodiment. The communication system includes a host computer, a base station and a UE which may be those described with reference to Figures 7 and 8. For simplicity of the present disclosure, only drawing references to Figure 11 will be included in this section. In an optional first step 3610 of the method, the UE receives input data provided by the host computer. Additionally or alternatively, in an optional second step 3620, the UE provides user data. In an optional substep 3621 of the second step 3620, the UE provides the user data by executing a client application. In a further optional substep 3611 of the first step 3610, the UE executes a client application which provides the user data in reaction to the received input data provided by the host computer. In providing the user data, the executed client application may further consider user input received from the user. Regardless of the specific manner in which the user data was provided, the UE initiates, in an optional third substep 3630, transmission of the user data to the host computer. In a fourth step 3640 of the method, the host computer receives the user data transmitted from the UE, in accordance with the teachings of the embodiments described throughout this disclosure.

Fig. 12 is a flowchart illustrating a method implemented in a communication system, in accordance with one embodiment. The communication system includes a host computer, a base station and a UE which may be those described with reference to Figures 7 and 8. For simplicity of the present disclosure, only drawing references to Figure 12 will be included in this section. In an optional first step 3710 of the method, in accordance with the teachings of the embodiments described throughout this disclosure, the base station receives user data from the UE. In an optional second step 3720, the base station initiates transmission of the received user data to the host computer. In a third step 3730, the host computer receives the user data carried in the transmission initiated by the base station.

It will be appreciated that the foregoing description and the accompanying drawings represent non-limiting examples of the methods and apparatus taught herein. As such, the apparatus and techniques taught herein are not limited by the foregoing description and accompanying drawings. Instead, the embodiments herein are limited only by the following claims.

## Claims

1. A method performed by a wireless device (10) for handling device to device communication in a wireless communication network, the method comprising:
- *determining* (301) based on at least a first condition and a second condition of the wireless device (10), at least one set of allowed transmission parameter values for each of the at least first and second condition of the wireless device;
- *determining* (302), whether there is one or more overlapping values across the set of allowed transmission parameter values for the first condition of the wireless device (10) and the set of allowed transmission parameter values for the second condition of the wireless device (10); and when determined that there is one or more overlapping values,
- *selecting* (303) a transmission parameter value of the one or more overlapping values; and when determined that there are no overlapping values
- *selecting* (304) a transmission parameter value from the sets of allowed transmission parameter values based on at least one specified selection criterion, wherein the at least one specified selection criterion considers at least one of:
- selecting a transmission parameter value based on an assigned priority for the set of allowed transmission parameter values in relation to another set; and/or
- selecting a transmission parameter value from the set of values of transmission parameters that is most restrictive.

2. The method according to claim 1, wherein, if the allowed transmission parameter values for the first condition of the wireless device (10) and the set of allowed transmission parameter values for the second condition of the wireless device (10) partly overlap, the at least one specified selection criterion is based on considering either one of the lowest upper bound, or the lowest lower bound, when selecting the set of values of transmission parameters.

3. The method according to any of the claims 1-2, wherein the at least first and second conditions of the wireless device (10) comprise at least two of:
- a congestion condition dependent on congestion of traffic;
- a movement condition dependent on speed and/or direction of the wireless device (10);
- a location condition dependent on location of the wireless device (10); and/or
- a capacity condition dependent on capacity of the wireless device (10).

4. The method according to any of the claims 1-3, further comprising
- *obtaining* multiple sets of allowed transmission parameter values, wherein the at least one set of allowed transmission parameter values is determined from the obtained multiple sets of values.

5. The method according to any of the claims 1-4, further comprising
- *using* the selected transmission parameter value during communication.

6. A method performed by a system comprising a radio network node (12) for handling resources of a wireless communication network and a wireless device (10) for handling device to device communication in a wireless communication network, the method comprising:
- *determining* (401), at the radio network node, multiple sets of transmission parameter values, wherein each set of values is associated to a condition, the condition being network related and/or wireless device related; and
- *configuring* (402), from the radio network node, the wireless device (10) with multiple sets of transmission parameter values;
- *determining* (403), at the wireless device, at least one candidate set of allowed transmission parameter values be used by the wireless device for each one of at least a first condition of the wireless device and at least a second condition of the wireless device;
- *determining* (404), at the wireless device, whether there is an overlap between two or more sets of transmission parameter values corresponding to said at least a first condition of the wireless device and at least a second condition of the wireless device; and if there is an overlap
- *selecting* (405), at the wireless device, a transmission parameter value of the one or more overlapping values; and when determined that there are no overlapping values
- *selecting* (405), at the wireless device, a transmission parameter based on at least one specified selection criterion, wherein the at least one specified selection criterion considers at least one of:
- selecting a transmission parameter value based on an assigned priority for the set of allowed transmission parameter values in relation to another set; and/or
- selecting a transmission parameter value from the set of values of transmission parameters that is most restrictive; and thereafter
- *using* (406), at the wireless device, the selected value during transmissions in the wireless communication network.

7. A wireless device (10) for handling device to device communication in a wireless communication network, wherein the wireless device (10) is configured to
determine based on at least a first condition and a second condition of the wireless device (10), at least one set of allowed transmission parameter values for each of the at least first and second condition of the wireless device (10);
determine whether there is one or more overlapping values across the set of allowed transmission parameter values for the first condition of the wireless device (10) and the set of allowed transmission parameter values for the second condition of the wireless device (10); and, when determined that there is one or more overlapping values, configured to,
select a transmission parameter value of the one or more overlapping values; and when determined that there is no overlapping values select a transmission parameter value from the sets of allowed transmission parameter values based on at least one specified selection criterion, wherein the at least one specified selection criterion is adapted to consider at least one of:
- selection of a transmission parameter value based on an assigned priority for the set of allowed transmission parameter values in relation to another set; and/or
- selection of a transmission parameter value from the set of values of transmission parameters that are most restrictive.

8. The wireless device (10) according to claim 7, wherein, if the allowed transmission parameter values for the first condition of the wireless device (10) and the set of allowed transmission parameter values for the second condition of the wireless device (10) partly overlap, the at least one specified selection criterion is based on considering either one of the lowest upper bound, or the lowest lower bound, when selecting the set of values of transmission parameters.

9. The wireless device (10) according to any of claims 7-8, wherein the at least first and second conditions of the wireless device (10) comprise at least two of:
- a congestion condition dependent on congestion of traffic;
- a movement condition dependent on speed and/or direction of the wireless device;
- a location condition dependent on location of the wireless device; and/or
- a capacity condition dependent on capacity of the wireless device.

10. The wireless device (10) according to any of the claims 7-9, wherein the wireless device (10) is further configured to
obtain multiple sets of allowed transmission parameter values, and configured to determine at least one set of allowed transmission parameter values by selecting from the obtained multiple sets of allowed transmission parameter values.

11. The wireless device (10) according to any of the claims 7-10, wherein the wireless device (10) is further configured to
use the selected transmission parameter value during communication.

12. A system comprising a radio network node (12) for handling resources of a wireless communication network and a wireless device (10) for handling device to device communication in a wireless communication network, wherein the network node (12) is configured to:
determine multiple sets of transmission parameter values, wherein each set of values is associated to a condition, the condition being network related and/or wireless device related; and
configure the wireless device (10) with multiple sets of transmission parameter values; and wherein the wireless device (10) is configured to:
determine a candidate set of values for one or more transmission parameters to be used by the wireless device (10);
determine whether there is an overlap between two or more sets of transmission parameter values; and if there is an overlap
select a transmission parameter value of the one or more overlapping values; and when determined that there are no overlapping values
select a transmission parameter based on at least one specified selection criterion, wherein the at least one specified selection criterion is adapted to consider at least one of:
selection of a transmission parameter value based on an assigned priority for the set of allowed transmission parameter values in relation to another set; and/or
selection of a transmission parameter value from the set of values of transmission parameters that is most restrictive; and thereafter
use the selected value during transmissions in the wireless communication network.

13. A computer program product comprising instructions, which, when executed on at least one processor, cause the at least one processor to carry out the method according to any of the claims 1-6, as performed by the wireless device (10) or the system, respectively.

14. A computer-readable storage medium, having stored thereon a computer program product comprising instructions which, when executed on at least one processor, cause the at least one processor to carry out the method according to any of the claims 1-6, as performed by the wireless device (10) or the system, respectively.

## Patentansprüche

1. Verfahren, das von einer drahtlosen Vorrichtung (10) zum Handhaben von Kommunikation von Vorrichtung zu Vorrichtung in einem drahtlosen Kommunikationsnetzwerk durchgeführt wird, wobei das Verfahren umfasst:
- Bestimmen (301) basierend auf mindestens einem ersten Zustand und einem zweiten Zustand der drahtlosen Vorrichtung (10) mindestens eines Satzes von zulässigen Übertragungsparameterwerten für jeden des mindestens einen ersten und des mindestens einen zweiten Zustands der drahtlosen Vorrichtung;
- Bestimmen (302), ob es einen oder mehrere überlappende Werte über den Satz von zulässigen Übertragungsparameterwerten für den ersten Zustand der drahtlosen Vorrichtung (10) und den Satz von zulässigen Übertragungsparameterwerten für den zweiten Zustand der drahtlosen Vorrichtung (10) gibt; und, wenn bestimmt wird, dass es einen oder mehrere überlappende Werte gibt,
- Auswählen (303) eines Übertragungsparameterwerts des einen oder der mehreren überlappenden Werte; und, wenn bestimmt wird, dass es keine überlappenden Werte gibt,
- Auswählen (304) eines Übertragungsparameterwerts aus den Sätzen von zulässigen Übertragungsparameterwerten basierend auf mindestens einem spezifizierten Auswahlkriterium, wobei das mindestens eine spezifizierte Auswahlkriterium mindestens eines in Betracht zieht von Folgendem:
- Auswählen eines Übertragungsparameterwerts basierend auf einer zugeordneten Priorität für den Satz von zulässigen Übertragungsparameterwerten in Bezug auf einen anderen Satz; und/oder
- Auswählen eines Übertragungsparameterwerts aus dem Satz von Werten von Übertragungsparametern, der am restriktivsten ist.

2. Verfahren nach Anspruch 1, wobei, wenn die zulässigen Übertragungsparameterwerte für den ersten Zustand der drahtlosen Vorrichtung (10) und der Satz von zulässigen Übertragungsparameterwerten für den zweiten Zustand der drahtlosen Vorrichtung (10) einander teilweise überlappen, das mindestens eine spezifizierte Auswahlkriterium beim Auswählen des Satzes von Werten von Übertragungsparametern auf einem In-Betracht-ziehen entweder einer der untersten Obergrenze oder der untersten Untergrenze basiert.

3. Verfahren nach einem der Ansprüche 1 bis 2, wobei der mindestens eine erste und der mindestens eine zweite Zustand der drahtlosen Vorrichtung (10) mindestens zwei umfassen von:
- einem Überlastungszustand in Abhängigkeit von Verkehrsüberlastung;
- einem Bewegungszustand in Abhängigkeit von einer Geschwindigkeit und/oder einer Richtung der drahtlosen Vorrichtung (10);
- einem Positionszustand in Abhängigkeit von einer Position der drahtlosen Vorrichtung (10);
- einem Kapazitätszustand in Abhängigkeit von einer Kapazität der drahtlosen Vorrichtung (10).

4. Verfahren nach einem der Ansprüche 1 bis 3, ferner umfassend:
- Erhalten von mehreren Sätzen von zulässigen Übertragungsparameterwerten, wobei der mindestens eine Satz von zulässigen Übertragungsparameterwerten aus den erhaltenen mehreren Sätzen von Werten bestimmt wird.

5. Verfahren nach einem der Ansprüche 1 bis 4, ferner umfassend:
- Verwenden des ausgewählten Übertragungsparameterwerts bei Kommunikation.

6. Verfahren, das von einem System mit einem Funknetzwerkknoten (12) zum Handhaben von Ressourcen eines drahtlosen Kommunikationsnetzwerks und einer drahtlosen Vorrichtung (10) zum Handhaben von Kommunikation von Vorrichtung zu Vorrichtung in einem drahtlosen Kommunikationsnetzwerk durchgeführt wird, wobei das Verfahren umfasst:
- Bestimmen (401) von mehreren Sätzen von Übertragungsparameterwerten am Funknetzwerkknoten, wobei jeder Satz von Werten mit einem Zustand assoziiert ist, wobei der Zustand in Bezug auf ein Netzwerk und/oder in Bezug auf eine drahtlose Vorrichtung ist; und
- Konfigurieren (402) vom Funknetzwerkknoten der drahtlosen Vorrichtung (10) mit mehreren Sätzen von Übertragungsparameterwerten;
- Bestimmen (403) mindestens eines Kandidatensatzes von zulässigen Übertragungsparameterwerten, der von der drahtlosen Vorrichtung für jeden mindestens eines ersten Zustands der drahtlosen Vorrichtung und mindestens eines zweiten Zustands der drahtlosen Vorrichtung verwendet werden soll, an der drahtlosen Vorrichtung;
- Bestimmen (404) an der drahtlosen Vorrichtung, ob eine Überlappung zwischen zwei oder mehr Sätzen von Übertragungsparameterwerten vorliegt, die dem mindestens einen ersten Zustand der drahtlosen Vorrichtung und mindestens einem zweiten Zustand der drahtlosen Vorrichtung entsprechen; und, wenn eine Überlappung vorliegt,
- Auswählen (405) eines Übertragungsparameterwerts des einen oder der mehreren überlappenden Werte an der drahtlosen Vorrichtung; und, wenn bestimmt wird, dass es keine überlappenden Werte gibt,
- Auswählen (405) eines Übertragungsparameters an der drahtlosen Vorrichtung basierend auf mindestens einem spezifizierten Auswahlkriterium, wobei das mindestens eine spezifizierte Auswahlkriterium mindestens eines in Betracht zieht von Folgendem:
- Auswählen eines Übertragungsparameterwerts basierend auf einer zugeordneten Priorität für den Satz von zulässigen Übertragungsparameterwerten in Bezug auf einen anderen Satz; und/oder
- Auswählen eines Übertragungsparameterwerts aus dem Satz von Werten von Übertragungsparametern, der am restriktivsten; und anschließend
- Verwenden (406) des ausgewählten Wertes an der drahtlosen Vorrichtung bei Übertragungen im drahtlosen Kommunikationsnetzwerk.

7. Drahtlose Vorrichtung (10) zum Handhaben von Kommunikation von Vorrichtung zu Vorrichtung in einem drahtlosen Kommunikationsnetzwerk, wobei die drahtlose Vorrichtung (10) konfiguriert ist zum:
Bestimmen basierend auf mindestens einem ersten Zustand und einem zweiten Zustand der drahtlosen Vorrichtung (10) mindestens eines Satzes von zulässigen Übertragungsparameterwerten für jeden des mindestens einen ersten und des mindestens einen zweiten Zustands der drahtlosen Vorrichtung (10);
Bestimmen, ob es einen oder mehrere überlappende Werte über den Satz von zulässigen Übertragungsparameterwerten für den ersten Zustand der drahtlosen Vorrichtung (10) und den Satz von zulässigen Übertragungsparameterwerten für den zweiten Zustand der drahtlosen Vorrichtung (10) gibt; und sie, wenn bestimmt wird, dass es einen oder mehrere überlappende Werte gibt, konfiguriert ist zum:
Auswählen eines Übertragungsparameterwerts des einen oder der mehreren überlappenden Werte; und, wenn bestimmt wird, dass es keine überlappenden Werte gibt, Auswählen eines Übertragungsparameterwerts aus den Sätzen von zulässigen Übertragungsparameterwerten basierend auf mindestens einem spezifizierten Auswahlkriterium, wobei das mindestens eine spezifizierte Auswahlkriterium ausgelegt ist, um mindestens eines von Folgendem in Betracht zu ziehen:
- Auswahl eines Übertragungsparameterwerts basierend auf einer zugeordneten Priorität für den Satz von zulässigen Übertragungsparameterwerten in Bezug auf einen anderen Satz; und/oder
- Auswahl eines Übertragungsparameterwerts aus dem Satz von Werten von Übertragungsparametern, der am restriktivsten ist.

8. Drahtlose Vorrichtung (10) nach Anspruch 7, wobei, wenn die zulässigen Übertragungsparameterwerte für den ersten Zustand der drahtlosen Vorrichtung (10) und der Satz von zulässigen Übertragungsparameterwerte für den zweiten Zustand der drahtlosen Vorrichtung (10) einander teilweise überlappen, das mindestens eine spezifizierte Auswahlkriterium beim Auswählen des Satzes von Werten von Übertragungsparametern auf einem In-Betracht-ziehen entweder einer der untersten Obergrenze oder der untersten Untergrenze basiert.

9. Drahtlose Vorrichtung (10) nach einem der Ansprüche 7 bis 8, wobei der mindestens eine erste und der mindestens eine zweite Zustand der drahtlosen Vorrichtung (10) mindestens zwei umfassen von:
- einem Überlastungszustand in Abhängigkeit von Verkehrsüberlastung;
- einem Bewegungszustand in Abhängigkeit von einer Geschwindigkeit und/oder einer Richtung der drahtlosen Vorrichtung;
- einem Positionszustand in Abhängigkeit von einer Position der drahtlosen Vorrichtung; und/oder
- einem Kapazitätszustand in Abhängigkeit von einer Kapazität der drahtlosen Vorrichtung.

10. Drahtlose Vorrichtung (10) nach einem der Ansprüche 7 bis 9, wobei die drahtlose Vorrichtung (10) ferner konfiguriert ist zum: Erhalten von mehreren Sätzen von zulässigen Übertragungsparameterwerten und konfiguriert ist zum Bestimmen mindestens eines Satzes von zulässigen Übertragungsparameterwerten durch Auswählen aus den erhaltenen mehreren Sätzen von zulässigen Übertragungsparameterwerten.

11. Drahtlose Vorrichtung (10) nach einem der Ansprüche 7 bis 10, wobei die drahtlose Vorrichtung (10) ferner konfiguriert ist zum:
Verwenden des ausgewählten Übertragungsparameterwerts bei Kommunikation.

12. System mit einem Funknetzwerkknoten (12) zum Handhaben von Ressourcen eines drahtlosen Kommunikationsnetzwerks und einer drahtlosen Vorrichtung (10) zum Handhaben von Kommunikation von Vorrichtung zu Vorrichtung in einem drahtlosen Kommunikationsnetzwerk, wobei der Netzwerkknoten (12) konfiguriert ist zum:
Bestimmen von mehreren Sätzen von Übertragungsparameterwerten am Funknetzwerkknoten, wobei jeder Satz von Werten mit einem Zustand assoziiert ist, wobei der Zustand in Bezug auf ein Netzwerk und/oder in Bezug auf eine drahtlose Vorrichtung ist; und
Konfigurieren der drahtlosen Vorrichtung (10) mit mehreren Sätzen von Übertragungsparameterwerten; und wobei die drahtlose Vorrichtung (10) konfiguriert ist zum:
Bestimmen eines Kandidatensatzes von Werten für einen oder mehrere Übertragungsparameter, der von der drahtlosen Vorrichtung (10) verwendet werden soll;
Bestimmen, ob eine Überlappung zwischen zwei oder mehr Sätzen von Übertragungsparameterwerten vorliegt; und, wenn eine Überlappung vorliegt,
Auswählen eines Übertragungsparameterwerts des einen oder der mehreren überlappenden Werte; und, wenn bestimmt wird, dass es keine überlappenden Werte gibt,
Auswählen eines Übertragungsparameters basierend auf mindestens einem spezifizierten Auswahlkriterium, wobei das mindestens eine spezifizierte Auswahlkriterium ausgelegt ist, um mindestens eines von Folgendem in Betracht zu ziehen:
Auswahl eines Übertragungsparameterwerts basierend auf einer zugeordneten Priorität für den Satz von zulässigen Übertragungsparameterwerten in Bezug auf einen anderen Satz; und/oder
Auswahl eines Übertragungsparameterwerts aus dem Satz von Werten von Übertragungsparametern, der am restriktivsten; und anschließend
Verwenden des ausgewählten Wertes bei Übertragungen im drahtlosen Kommunikationsnetzwerk.

13. Computerprogrammprodukt, umfassend Anweisungen, die bei Ausführung auf mindestens einem Prozessor den mindestens einen Prozessor zum Ausführen des Verfahrens nach einem der Ansprüche 1 bis 6 veranlassen, wie von der drahtlosen Vorrichtung (10) bzw. dem System durchgeführt.

14. Computerlesbares Speichermedium mit einem darauf gespeicherten Computerprogrammprodukt, das Anweisungen umfasst, die bei Ausführung auf mindestens einem Prozessor den mindestens einen Prozessor zum Ausführen des Verfahrens nach einem der Ansprüche 1 bis 6 veranlassen, wie von der drahtlosen Vorrichtung (10) bzw. dem System durchgeführt.

## Revendications

1. Procédé réalisé par un dispositif sans fil (10) pour gérer une communication de dispositif à dispositif dans un réseau de communication sans fil, le procédé comprenant :
- la détermination (301), sur la base au moins d'une première condition et d'une deuxième condition du dispositif sans fil (10), d'au moins un ensemble de valeurs de paramètres de transmission autorisées pour chacune des au moins une première condition et une deuxième condition du dispositif sans fil ;
- la détermination (302), s'il y a une ou plusieurs valeurs se chevauchant dans l'ensemble de valeurs de paramètres de transmission autorisées pour la première condition du dispositif sans fil (10) et l'ensemble de valeurs de paramètres de transmission autorisées pour la deuxième condition du dispositif sans fil (10) ; et, lorsqu'il est déterminé qu'il y a une ou plusieurs valeurs se chevauchant,
- la sélection (303) d'une valeur de paramètre de transmission parmi les une ou plusieurs valeurs se chevauchant ; et lorsqu'il est déterminé qu'il n'y a pas de valeurs se chevauchant
- la sélection (304) d'une valeur de paramètre de transmission parmi les ensembles de valeurs de paramètres de transmission autorisées sur la base d'au moins un critère de sélection spécifié, dans lequel l'au moins un critère de sélection spécifié tient compte d'au moins l'une parmi :
- la sélection d'une valeur de paramètre de transmission sur la base d'une priorité attribuée pour l'ensemble de valeurs de paramètres de transmission autorisées par rapport à un autre ensemble ; et/ou
- la sélection d'une valeur de paramètre de transmission parmi l'ensemble de valeurs de paramètres de transmission qui est la plus restrictive.

2. Procédé selon la revendication 1, dans lequel, si les valeurs de paramètres de transmission autorisées pour la première condition du dispositif sans fil (10) et l'ensemble de valeurs de paramètres de transmission autorisées pour la deuxième condition du dispositif sans fil (10) se chevauchent partiellement, l'au moins un critère de sélection spécifié est basé sur la prise en compte de la limite supérieure la plus basse ou de la limite inférieure la plus basse lors de la sélection de l'ensemble de valeurs de paramètres de transmission.

3. Procédé selon la revendication 1 ou 2, dans lequel les au moins une première condition et une deuxième condition du dispositif sans fil (10) comprennent au moins deux parmi :
- une condition d'encombrement en fonction d'un encombrement de trafic ;
- une condition de mouvement en fonction d'une vitesse et/ou d'une direction du dispositif sans fil (10) ;
- une condition d'emplacement en fonction d'un emplacement du dispositif sans fil (10) ; et/ou
- une condition de capacité en fonction d'une capacité du dispositif sans fil (10).

4. Procédé selon l'une quelconque des revendications 1 à 3, comprenant en outre
- l'obtention de multiples ensembles de valeurs de paramètres de transmission autorisées, dans lequel l'au moins un ensemble de valeurs de paramètres de transmission autorisées est déterminé parmi les multiples ensembles de valeurs obtenus.

5. Procédé selon l'une quelconque des revendications 1 à 4, comprenant en outre
- l'utilisation de la valeur de paramètre de transmission sélectionnée au cours d'une communication.

6. Procédé réalisé par un système comprenant un nœud de réseau radio (12) pour gérer des ressources d'un réseau de communication sans fil et un dispositif sans fil (10) pour gérer une communication de dispositif à dispositif dans un réseau de communication sans fil, le procédé comprenant :
- la détermination (401), au niveau du nœud de réseau radio, de multiples ensembles de valeurs de paramètres de transmission, dans lequel chaque ensemble de valeurs est associé à une condition, la condition étant relative au réseau et/ou au dispositif sans fil ; et
- la configuration (402), depuis le nœud de réseau radio, du dispositif sans fil (10) avec de multiples ensembles de valeurs de paramètres de transmission ;
- la détermination (403), au niveau du dispositif sans fil, d'au moins un ensemble candidat de valeurs de paramètres de transmission autorisées à utiliser par le dispositif sans fil pour chacune d'au moins une première condition du dispositif sans fil et d'au moins une deuxième condition du dispositif sans fil ;
- la détermination (404), au niveau du dispositif sans fil, s'il y a un chevauchement entre deux ensembles de valeurs de paramètres de transmission ou plus correspondant auxdites au moins une première condition du dispositif sans fil et au moins une deuxième condition du dispositif sans fil ; et s'il y a un chevauchement
- la sélection (405), au niveau du dispositif sans fil, d'une valeur de paramètre de transmission parmi les une ou plusieurs valeurs se chevauchant ; et lorsqu'il est déterminé qu'il n'y a pas de valeurs se chevauchant
- la sélection (405), au niveau du dispositif sans fil, d'un paramètre de transmission sur la base d'au moins un critère de sélection spécifié, dans lequel l'au moins un critère de sélection spécifié tient compte d'au moins l'une parmi :
- la sélection d'une valeur de paramètre de transmission sur la base d'une priorité attribuée pour l'ensemble de valeurs de paramètres de transmission autorisées par rapport à un autre ensemble ; et/ou
- la sélection d'une valeur de paramètre de transmission parmi l'ensemble de valeurs de paramètres de transmission qui est la plus restrictive ; puis
- l'utilisation (406), au niveau du dispositif sans fil, de la valeur sélectionnée au cours de transmissions dans le réseau de communication sans fil.

7. Dispositif sans fil (10) pour gérer une communication de dispositif à dispositif dans un réseau de communication sans fil, dans lequel le dispositif sans fil (10) est configuré pour :
déterminer, sur la base au moins d'une première condition et d'une deuxième condition du dispositif sans fil (10), au moins un ensemble de valeurs de paramètres de transmission autorisées pour chacune des au moins une première condition et une deuxième condition du dispositif sans fil (10) ;
déterminer, s'il y a une ou plusieurs valeurs se chevauchant dans l'ensemble de valeurs de paramètres de transmission autorisées pour la première condition du dispositif sans fil (10) et l'ensemble de valeurs de paramètres de transmission autorisées pour la deuxième condition du dispositif sans fil (10) ; et, lorsqu'il est déterminé qu'il y a une ou plusieurs valeurs se chevauchant, configuré pour
sélectionner une valeur de paramètre de transmission parmi les une ou plusieurs valeurs se chevauchant ; et lorsqu'il est déterminé qu'il n'y a pas de valeurs se chevauchant
sélectionner une valeur de paramètre de transmission parmi les ensembles de valeurs de paramètres de transmission autorisées sur la base d'au moins un critère de sélection spécifié, dans lequel l'au moins un critère de sélection spécifié est apte à tenir compte d'au moins l'une parmi :
- la sélection d'une valeur de paramètre de transmission sur la base d'une priorité attribuée pour l'ensemble de valeurs de paramètres de transmission autorisées par rapport à un autre ensemble ; et/ou
- la sélection d'une valeur de paramètre de transmission parmi l'ensemble de valeurs de paramètres de transmission qui est la plus restrictive.

8. Dispositif sans fil (10) selon la revendication 7, dans lequel, si les valeurs de paramètres de transmission autorisées pour la première condition du dispositif sans fil (10) et l'ensemble de valeurs de paramètres de transmission autorisées pour la deuxième condition du dispositif sans fil (10) se chevauchent partiellement, l'au moins un critère de sélection spécifié est basé sur la prise en compte de la limite supérieure la plus basse ou de la limite inférieure la plus basse lors de la sélection de l'ensemble de valeurs de paramètres de transmission.

9. Dispositif sans fil (10) selon la revendication 7 ou 8, dans lequel les au moins une première condition et une deuxième condition du dispositif sans fil (10) comprennent au moins deux parmi :
- une condition d'encombrement en fonction d'un encombrement de trafic ;
- une condition de mouvement en fonction d'une vitesse et/ou d'une direction du dispositif sans fil ;
- une condition d'emplacement en fonction d'un emplacement du dispositif sans fil ; et/ou
- une condition de capacité en fonction d'une capacité du dispositif sans fil.

10. Dispositif sans fil (10) selon l'une quelconque des revendications 7 à 9, dans lequel le dispositif sans fil (10) est en outre configuré pour
obtenir de multiples ensembles de valeurs de paramètres de transmission autorisées, et configuré pour déterminer au moins un ensemble de valeurs de paramètres de transmission autorisées par la sélection parmi les multiples ensembles de valeurs de paramètres de transmission autorisées obtenus.

11. Dispositif sans fil (10) selon l'une quelconque des revendications 7 à 10, dans lequel le dispositif sans fil (10) est en outre configuré pour
utiliser la valeur de paramètre de transmission sélectionnée au cours d'une communication.

12. Système comprenant un nœud de réseau radio (12) pour gérer des ressources d'un réseau de communication sans fil et un dispositif sans fil (10) pour gérer une communication de dispositif à dispositif dans un réseau de communication sans fil, dans lequel le nœud de réseau (12) est configuré pour :
déterminer de multiples ensembles de valeurs de paramètres de transmission, dans lequel chaque ensemble de valeurs est associé à une condition, la condition étant relative au réseau et/ou au dispositif sans fil ; et
configurer le dispositif sans fil (10) avec de multiples ensembles de valeurs de paramètres de transmission ; et dans lequel le dispositif sans fil (10) est configuré pour :
déterminer un ensemble candidat de valeurs d'un ou plusieurs paramètres de transmission à utiliser par le dispositif sans fil (10) ;
déterminer s'il y a un chevauchement entre deux ensembles de valeurs de paramètres de transmission ou plus ; et s'il y a un chevauchement
sélectionner une valeur de paramètre de transmission parmi les une ou plusieurs valeurs se chevauchant ; et lorsqu'il est déterminé qu'il n'y a pas de valeurs se chevauchant
sélectionner un paramètre de transmission sur la base d'au moins un critère de sélection spécifié, dans lequel l'au moins un critère de sélection spécifié est apte à tenir compte d'au moins l'une parmi :
la sélection d'une valeur de paramètre de transmission sur la base d'une priorité attribuée pour l'ensemble de valeurs de paramètres de transmission autorisées par rapport à un autre ensemble ; et/ou
la sélection d'une valeur de paramètre de transmission parmi l'ensemble de valeurs de paramètres de transmission qui est la plus restrictive ; puis
utiliser la valeur sélectionnée au cours de transmissions dans le réseau de communication sans fil.

13. Produit de programme d'ordinateur comprenant des instructions qui, lorsqu'elles sont exécutées sur au moins un processeur, amènent l'au moins un processeur à mettre en œuvre le procédé selon l'une quelconque des revendications 1 à 6, qui est réalisé respectivement par le dispositif sans fil (10) ou le système.

14. Support de stockage lisible par ordinateur sur lequel est stocké un produit de programme d'ordinateur comprenant des instructions qui, lorsqu'elles sont exécutées sur au moins un processeur, amènent l'au moins un processeur à mettre en œuvre le procédé selon l'une quelconque des revendications 1 à 6, qui est réalisé respectivement par le dispositif sans fil (10) ou le système.
